# EUROPEAN PATENT SPECIFICATION

(11) **EP 2 730 328 B1**
(45) Date of publication and mention of the grant of the patent: **13.01.2016**
(21) Application number: 13190529.1
(22) Date of filing: 28.10.2013
(51) Int. Cl.: B01D 53/04, F01K 17/00, F23J 15/02

(54) **Solid CO2 adsorbent material system**
System zur CO2-Adsorption mit einem Feststoffadsorbent
Système de matériau adsorbant CO2 solide

(30) Priority: 08.11.2012 JP 2012245932
(43) Date of publication of application: 14.05.2014
(73) Proprietor: Hitachi, Ltd., Tokyo (JP)
(72) Inventor: Orita, Hisayuki, Tokyo, 100-8280, (JP); Mukaide, Masaaki, Tokyo, 100-8280, (JP); Yoshida, Noriko, Tokyo, 100-8280, (JP); Kaneeda, Masato, Tokyo, 100-8280, (JP); Sato, Hiroki, Tokyo, 100-8280, (JP); Yoshikawa, Kohei, Tokyo, 100-8280, (JP)
(74) Representative: Calderbank, Thomas Roger

(56) References cited:
- WO-A2-2012/083108
- US-A1- 2012 118 009

## Description

The present invention relates to a solid CO₂ adsorbent material system for recovering CO₂ contained in exhaust gas using a solid adsorbent material.

As measures for global warming, a technique for recovering discharged CO₂ has been demanded. In exhaust gas from a combustion device (hereinafter referred to as "boiler") which burns a fossil fuel such as coal, petroleum, or LNG to generate steam, CO₂ is contained in an amount of several to a dozen percent. Therefore, the demand for recovery of CO₂ contained in exhaust gas from a boiler has been increased.

As one of the techniques for recovering CO₂ contained in exhaust gas, there is known a CO₂ chemical absorption system in which an aqueous amine solution obtained by mixing an amine and water is used as a CO₂ absorbent material. This CO₂ chemical absorption system is constituted by an absorption tower, in which CO₂ in exhaust gas is absorbed by an aqueous amine solution, and a regeneration tower, which releases absorbed CO₂ from the aqueous amine solution.

In the absorption tower, mist containing an amine is generated by gas-liquid contact between the exhaust gas and the aqueous amine solution, and this mist is scattered along with the exhaust gas. Further, due to reaction heat when CO₂ is absorbed, the temperature of the aqueous amine solution is increased to evaporate the amine. In this manner, since the amine is contained in the exhaust gas from the absorption tower, the amine is released to the atmosphere. The release of the amine to the atmosphere may cause air pollution.

A solid CO₂ adsorbent material system uses a solid CO₂ adsorbent material (a solid adsorbent material) without using an amine. This system does not release an amine to the atmosphere. However, since the adsorbent material for recovering CO₂ is a solid, it is not easy to transport the adsorbent material from an adsorption tower for adsorbing CO₂ to a regeneration tower for desorbing CO₂ and also it is not easy to transport the adsorbent material from the regeneration tower to the adsorption tower. Therefore, the solid adsorbent material is fixed to a packed tower and placed therein. JP-A-2005-161220 (PTL 1) discloses an example of a solid CO₂ adsorbent material system.

As disclosed in PTL 1, in a conventional solid CO₂ adsorbent material system, a valve is provided in a pipe connected to a packed tower, and by switching the opening and closing of the valve, the adsorption of CO₂ on a solid adsorbent material and the desorption of CO₂ from the solid adsorbent material (regeneration of the solid adsorbent material) are performed. When the packed tower is configured to have two towers, the adsorption of CO₂ and the regeneration of the solid adsorbent material can be continuously performed by performing the adsorption of CO₂ in one tower and performing the desorption of CO₂ in the other tower.

In the CO₂ chemical absorption system and the solid CO₂ adsorbent material system, heat (regeneration heat) is used for regenerating the adsorbent material by desorbing CO₂ from the adsorbent material. From the viewpoint of energy saving, it is desired to reduce the amount of heat used in the system. Due to this, it is necessary to recover heat generated in the system and reuse the heat as regeneration heat or the like.

Further, in the solid CO₂ adsorbent material system, when gas is introduced into the packed tower, the superficial velocity is decreased so that powder is not scattered. By doing this, the absorption reaction of CO₂ in the packed tower proceeds over time in the direction from the inlet to the outlet of exhaust gas. As the progress of the CO₂ absorption reaction, the temperature of the solid adsorbent material and also the temperature of the exhaust gas are increased. When adsorption equilibrium is reached, the contents of the packed tower are cooled by exhaust gas flowing therein, and the temperature is decreased. Therefore, the temperature distribution in the packed tower varies over time and becomes a non-stationary distribution such that a high-temperature portion moves along the traveling direction of the exhaust gas. In a conventional solid CO₂ adsorbent material system as disclosed in PTL 1, a device which recovers the reaction heat is provided, however, a device under the assumption that the temperature distribution in the packed tower is stationary is used, and therefore, efficient heat recovery is difficult.

Further, the CO₂ chemical absorption system or the conventional solid CO₂ adsorbent material system is a system based on the premise of continuous operation such that the adsorption of CO₂ and the regeneration of the adsorbent material are continuously performed. In such a system, when CO₂ in exhaust gas from a boiler is recovered, and high-temperature steam is used as a heating source for regenerating the adsorbent material, in the case where the load (output) of the boiler varies, the amounts of recovered CO₂ and the regenerated adsorbent material also vary. Therefore, in consideration of the system as a whole, continuous operation is not always effective from the viewpoint of reduction in the amount of heat used and efficient heat recovery.

As described above, a CO₂ chemical absorption system and a solid CO₂ adsorbent material system are required to achieve reduction in the amount of heat used and efficient heat recovery.

In US2012/118009 a system for isolating greenhouse gas from exhaust gas is disclosed having an adsorbent contained in the vessel to adsorb greenhouse gas under suitable conditions and a heat source to desorb the greenhouse gas.

According to the present invention there is provided a solid CO₂ adsorbent material system comprising:
a boiler which burns a fossil fuel to generate steam and
exhaust gas; a steam turbine which is driven by the steam; a condenser which condenses the steam after driving the steam turbine; a deaerator and a feed water heater which heats water condensed by the condenser using steam of the steam turbine; and a packed tower in which a solid adsorbent material for adsorbing CO₂ is placed and CO₂ in the exhaust gas is adsorbed by the solid adsorbent material when the exhaust gas is supplied thereto. To the packed tower, water condensed by the condenser is supplied as a heat transfer medium. The water as a heat transfer medium transfers heat to the solid
adsorbent material in a non-contact manner to cool the solid adsorbent material having CO₂ adsorbed thereon, and then is discharged from the packed tower and supplied to the feed water heater or the deaerator.

According to the present invention, a solid CO₂ adsorbent material system, which recovers CO₂ using a solid adsorbent material and enables efficient heat recovery and reduction in the amount of heat used can be provided.

In the drawings:
Fig. 1 is a schematic structural view of a solid CO₂ adsorbent material system when recovering CO₂ according to a first embodiment of the present invention.
Fig. 2 is a schematic structural view of a solid CO₂ adsorbent material system when regenerating a solid adsorbent material according to a second embodiment of the present invention.
Fig. 3 is a schematic structural view of a solid CO₂ adsorbent material system when performing recovery of CO₂ and regeneration of a solid adsorbent material according to a third embodiment of the present invention.
Fig. 4A is a schematic top view of a packed tower according to an embodiment of the present invention.
Fig. 4B is a schematic side view of a packed tower according to an embodiment of the present invention.

The solid CO₂ adsorbent material system according to the present invention includes a packed tower in which a solid CO₂ adsorbent material (hereinafter referred to as "solid CO₂ adsorbent material" or "solid adsorbent material") is placed, and recovers CO₂ in exhaust gas from a boiler using the solid adsorbent material. The solid adsorbent material placed in the packed tower is cooled when adsorbing CO₂ and heated when desorbing CO₂. In the packed tower, a heat transfer medium flows such that it does not come in direct contact with the solid adsorbent material and cools or heats the solid adsorbent material. In this system, cooling and heating of the solid adsorbent material can be switched by opening or closing the valve.

When the solid adsorbent material adsorbs CO₂, water condensed by the condenser is supplied to the packed tower as cooling water to cool the solid adsorbent material. Water heated by the solid adsorbent material is supplied to the feed water heater. When the solid adsorbent material is regenerated (when CO₂ is desorbed from the solid adsorbent material), steam from a turbine is supplied to the packed tower to heat the solid adsorbent material. The steam after heating the solid adsorbent material is liquefied and supplied to the feed water heater or the deaerator. If a pressure gauge is provided in a pipe between the packed tower and the feed water heater or the deaerator, the pressure of the steam can be adjusted such that the temperature of the liquefied steam and the water temperature in the feed water heater or the deaerator are the same.

When the operation of this system is switched from the adsorption of CO₂ by the solid adsorbent material to the regeneration of the solid adsorbent material, the heat transfer medium flowing through the packed tower is changed from cooling water to steam. At this time, the flow rate of steam can be gradually increased by a flow rate control valve so that the temperature of the pipe is not rapidly changed. On the other hand, when the operation of this system is switched from the regeneration of the solid adsorbent material to the adsorption of CO₂ by the solid adsorbent material, the heat transfer medium flowing through the pipe is changed from steam to cooling water. At this time, the flow rate of cooling water can be gradually increased by a flow rate control valve so that the temperature of the pipe is not rapidly changed.

In this system, it is preferred to switch the operation between adsorption and regeneration such that a variation in load (output) of the boiler is decreased. For example, each of switching the operation from adsorption to regeneration and switching the operation from regeneration to adsorption is performed once a day, and it is preferred that CO₂ is adsorbed on the solid adsorbent material during the daytime when the load of the boiler is large, and the solid adsorbent material is regenerated during the nighttime when the load of the boiler is small.

In the solid CO₂ adsorbent material system according to the present invention, when the solid adsorbent material adsorbs CO₂, reaction heat generated by the adsorption is given to the feed water heater, and the output of the turbine can be improved. When the solid adsorbent material is regenerated, heat-exchanged steam is liquefied, and water at a constant temperature is introduced into the feed water heater or the deaerator, and thereby, a variation in the load of the turbine can be suppressed.

By avoiding rapid change in the temperature of the pipe when switching the operation between adsorption and regeneration, the damage to the pipe can be decreased. Further, by allowing the solid adsorbent material to adsorb CO₂ during the daytime, and utilizing the reaction heat for the output of the turbine, the output of the turbine can be increased during the daytime. By regenerating the solid adsorbent material during the nighttime, a decrease in the load of the boiler during the nighttime can be mitigated, and a variation in the load of the boiler can be decreased, and therefore, the service life of the boiler can be prolonged.

Hereinafter, embodiments of the solid CO₂ adsorbent material system according to the present invention in the case where CO₂ in exhaust gas generated from a pulverized coal firing boiler is recovered will be described. The solid CO₂ adsorbent material system according to the present invention is not limited to a system using a pulverized coal firing boiler, but can be applied to a system in which a fossil fuel is fired to generate electricity.

### First Embodiment

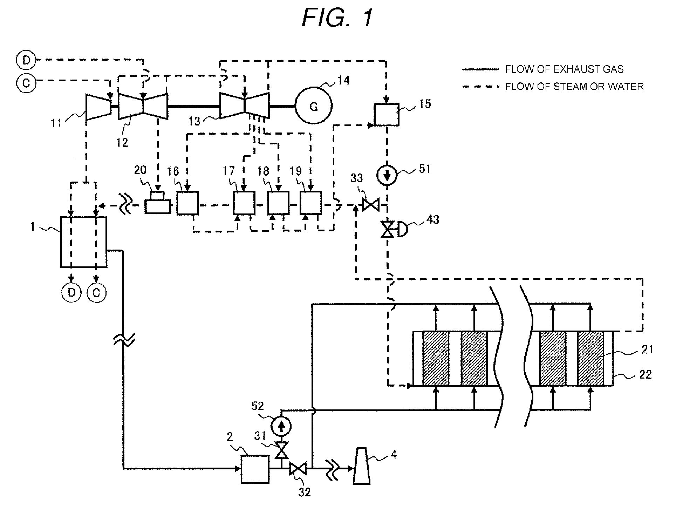

A first embodiment of the solid CO₂ adsorbent material system according to the present invention will be described with reference to Fig. 1. In the first embodiment, a solid CO₂ adsorbent material system when CO₂ is recovered, that is, when a solid adsorbent material adsorbs CO₂ will be described.

Fig. 1 is a schematic structural view of a solid CO₂ adsorbent material system and shows the system when a solid adsorbent material adsorbs CO₂. The solid CO₂ adsorbent material system is provided with an electricity generating system and a packed tower 22. The electricity generating system is provided with a boiler 1, a steam turbine, an electricity generator 14, a condenser 15, low-pressure feed water heaters 16 to 19, and a deaerator 20. The steam turbine includes a high-pressure turbine 11, an intermediate-pressure turbine 12, and a low-pressure turbine 13.

In the packed tower 22, a solid adsorbent material 21 is placed. The solid adsorbent material 21 is packed in, for example, a cylindrical container and placed in the packed tower 22. In Fig. 1, as one example, the packed tower 22 having four or more cylindrical containers is shown.

In exhaust gas generated by firing pulverized coal in the boiler 1, CO₂, nitrogen oxides, sulfur oxides, and soot dust are contained. The exhaust gas from the boiler 1 is released to the atmosphere from a chimney 4 after the nitrogen oxides are removed by a denitrification device (not shown), the soot dust is removed by an electrostatic precipitator (not shown), the sulfur oxides are removed by a desulfurization device 2, and CO₂ is recovered by the packed tower 22. When CO₂ is recovered by the packed tower 22, due to the absorption and adsorption of the nitrogen oxides and the sulfur oxides, and the adhesion of the soot dust, the CO₂ adsorption performance of the solid adsorbent material 21 is decreased. Therefore, the exhaust gas subjected to depuration by removing the nitrogen oxides, the soot dust, and the sulfur oxides is introduced into the packed tower 22, and the decrease in the adsorption performance of the solid adsorbent material 21 is suppressed.

A pipe connecting the desulfurization device 2 to the packed tower 22 is provided with a valve 31 and a fan 52, and a pipe connecting the desulfurization device 2 to the chimney 4 is provided with a valve 32. When CO₂ is recovered, the valve 31 is opened, and the exhaust gas is drawn by the fan 52 and introduced into the packed tower 22. When the entire amount of the exhaust gas is introduced into the packed tower 22, it is only necessary to close the valve 32.

As described in a fourth embodiment, the packed tower 22 has a structure such that heat can be transferred in a non-contact manner between the solid adsorbent material 21 and a heat transfer medium such as cooling water or steam. A structure in which the solid adsorbent material 21 and the heat transfer medium come in direct contact with each other is not preferred because the solid adsorbent material 21 becomes wet due to water contained in the heat transfer medium so that a device for drying the solid adsorbent material 21 is required or the adsorption performance of the solid adsorbent material 21 is deteriorated. In the packed tower 22, exhaust gas containing CO₂ is introduced into a space packed with the solid adsorbent material 21 to adsorb CO₂ on the solid adsorbent material 21. The exhaust gas having a reduced CO₂ content is released to the atmosphere from the chimney 4.

High-temperature and high-pressure steam C and D generated by the boiler 1 are introduced into the high-pressure turbine 11, the intermediate-pressure turbine 12, and the low-pressure turbine 13, and utilized for generating electricity in the electricity generator 14. The steam after driving the low-pressure turbine 13 is cooled and condensed by the condenser 15. The water condensed by the condenser 15 is supplied to the low-pressure feed water heaters 16 to 19, the deaerator 20, and the high-pressure feed water heater through a pump 51 and a valve 33, heated using steam extracted from the high-pressure turbine 11, the intermediate-pressure turbine 12, and the low-pressure turbine 13, and converted into high-pressure steam again by the boiler 1. Incidentally, the high-pressure feed water heater is not shown in Fig. 1, but is disposed between the deaerator 20 and the boiler 1.

As the solid adsorbent material 21, an inorganic material constituted by an oxide of an alkali metal, an alkaline earth metal, or a rare earth element, or an inorganic material of silica alumina is used. When CO₂ is adsorbed on such a material, heat is generated, and the temperature of the material itself is increased. Hereinafter, this generated heat is referred to as "adsorption heat". As the temperature of the solid adsorbent material 21 is decreased, the amount of CO₂ adsorbed by the solid adsorbent material 21 can be increased, and therefore, it is desired to cool the solid adsorbent material 21 whose temperature has been increased.

As the heat transfer medium (cooling water) for cooling the solid adsorbent material 21, water obtained by condensing steam by the condenser 15 is used. A pipe for feeding water to the packed tower 22 from the condenser 15 is provided, and a control valve 43 is provided in this pipe. When the control valve 43 is opened, cooling water can be supplied to the packed tower 22 from the condenser 15. In the packed tower 22, the solid adsorbent material 21 is cooled without coming in direct contact with cooling water.

In order to supply water from the condenser 15 to the low-pressure feed water heaters 16 to 19, the deaerator 20, the high-pressure feed water heater, and the packed tower 22, a pipe which branches into two pipes at a branching point in the pipe may be connected to the condenser 15. Through one branched pipe of this pipe, water condensed by the condenser 15 (cooling water) is supplied to the packed tower 22, and through the other branched pipe, water condensed by the condenser 15 is supplied to the low-pressure feed water heaters 16 to 19, the deaerator 20, and the high-pressure feed water heater. A valve 33 is provided between this branching point and the low-pressure feed water heater 19, and a control valve 43 is provided between this branching point and the packed tower 22.

The temperature of cooling water after cooling the solid adsorbent material 21 is increased. This water whose temperature has been increased is supplied to at least one of the low-pressure feed water heaters 16 to 19, the deaerator 20, and the high-pressure feed water heater. Which of the low-pressure feed water heaters 16 to 19, the deaerator 20, and the high-pressure feed water heater is supplied with this water can be determined according to the temperature of the water. In the example shown in Fig. 1, this water is supplied upstream of the low-pressure feed water heater 19.

In the solid CO₂ adsorbent material system according to this embodiment, the solid adsorbent material 21 is cooled using water condensed by the condenser 15. As a result, the amount of CO₂ adsorbed on the solid adsorbent material 21 can be increased. Further, by giving the adsorption heat through the cooling water to at least one of the low-pressure feed water heaters 16 to 19, the deaerator 20, and the high-pressure feed water heater, energy for driving the steam turbines 11 to 13 can be increased. Accordingly, in this system, the amount of heat used can be decreased by efficiently recovering heat and the electricity generation amount can be increased.

### Second Embodiment

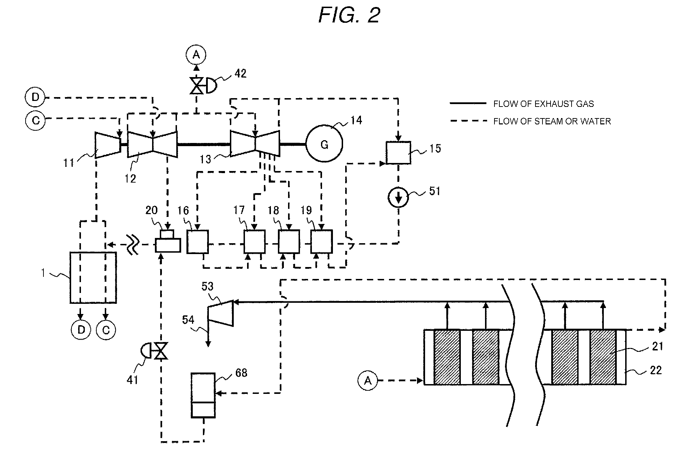

A second embodiment of the solid CO₂ adsorbent material system according to the present invention will be described with reference to Fig. 2. In the second embodiment, a solid CO₂ adsorbent material system when a solid adsorbent material is regenerated, that is, when a solid adsorbent material desorbs CO₂ will be described.

Fig. 2 is a schematic structural view of a solid CO₂ adsorbent material system and shows the system when a solid adsorbent material is regenerated. In Fig. 2, the same reference numerals as in Fig. 1 denote the same or common components as in Fig. 1, and thus the descriptions of these components will be omitted. The solid CO₂ adsorbent material system is further provided with a compressor 53 and a gas-liquid separator 68.

In a packed tower 22, as a heating source for desorbing CO₂ from a solid adsorbent material 21 and regenerating the solid adsorbent material 21, steam extracted from a steam turbine is used. In Fig. 2, a pipe for supplying steam A to the packed tower 22 from the wake of an intermediate-pressure turbine 12 is provided, and a control valve 42 is provided in this pipe. When the control valve 42 is opened, the steam A can be supplied to the packed tower 22 from the intermediate-pressure turbine 12. In the packed tower 22, the solid adsorbent material 21 is heated without coming in direct contact with steam serving as a heat transfer medium. The steam after heating the solid adsorbent material 21 is liquefied since it has given sensible heat and latent heat to the solid adsorbent material 21 to decrease its temperature. The latent heat is larger than the sensible heat, and the solid adsorbent material 21 is heated mainly by the latent heat of the steam and desorbs CO₂.

Also in a CO₂ chemical absorption system, by using steam extracted from a steam turbine, CO₂ is desorbed from an absorbing liquid. However, the absorbing liquid is an aqueous amine solution, and when high-temperature steam is used, an amine is decomposed and thermally deteriorated. In order to prevent such thermal deterioration, a temperature decreasing device which decreases the temperature of steam is provided, and steam at a temperature at which an amine is not decomposed is supplied to the absorbing liquid.

In this embodiment, since an inorganic material is used as the solid adsorbent material 21 which adsorbs CO₂, the solid adsorbent material 21 is not deteriorated by high-temperature steam extracted from a steam turbine. Therefore, a temperature decreasing device is not required, and thus, the system has a simpler structure than the CO₂ chemical absorption system.

CO₂ desorbed from the solid adsorbent material 21 is pressurized by the compressor 53 and recovered as liquefied CO₂ 54. If the packed tower 22 has a structure such that the solid adsorbent material 21 and steam are brought into direct contact with each other to heat the solid adsorbent material 21, it is necessary that a condenser which cools and liquefies steam be provided between the packed tower 22 and the compressor 53, and CO₂ be introduced into the compressor 53 after separating CO₂ from water (liquefied steam). However, in the packed tower 22 of this embodiment, since the solid adsorbent material 21 is heated without coming in contact with steam, a condenser which cools and liquefies steam is not required, and thus, the system is simplified.

The steam after heating the solid adsorbent material 21 is liquefied and supplied to the liquid phase in a deaerator 20. A gas-liquid separator 68 and a control valve 41 are provided between the packed tower 22 and the deaerator 20, and steam is liquefied by the gas-liquid separator 68.

The temperature at which the steam is liquefied can be controlled by the pressure of the gas phase in the gas-liquid separator 68 determined by the aperture of the control valve 41. The gas phase temperature and the liquid phase temperature in the gas-liquid separator 68 are the same, and the gas phase temperature and the liquid phase temperature are increased as the pressure of the gas phase is increased, and decreased as the pressure of the gas phase is decreased. In this embodiment, the pressure of the gas phase in the gas-liquid separator 68 is adjusted by changing the aperture of the control valve 41 such that the liquid phase temperature in the gas-liquid separator 68 and the water temperature in the deaerator 20 are the same.

It is also possible to liquefy the steam after heating the solid adsorbent material 21 and supply the liquefied steam to at least one of low-pressure feed water heaters 16 to 19. In this case, since the water temperature in the low-pressure feed water heaters 16 to 19 is lower than the water temperature in the deaerator 20, the aperture of the control valve 41 is changed so that the steam is liquefied at a temperature lower than the water temperature in the deaerator 20. Further, it is also possible to liquefy the steam after heating the solid adsorbent material 21 and supply the liquefied steam to a high-pressure feed water heater. In this case, since the water temperature in the high-pressure feed water heater is higher than the water temperature in the deaerator 20, the aperture of the control valve 41 is changed so that the steam is liquefied at a temperature higher than the water temperature in the deaerator 20.

That is, the temperature at which the steam after heating the solid adsorbent material 21 is liquefied by the gas-liquid separator 68 can be changed according to which of the deaerator 20, the low-pressure feed water heaters 16 to 19, and the high-pressure feed water heater is supplied with the liquefied steam. Which of the deaerator 20, the low-pressure feed water heaters 16 to 19, and the high-pressure feed water heater is supplied with the steam after heating the solid adsorbent material 21 (steam liquefied by the gas-liquid separator 68) can be determined according to the temperature of the steam discharged from the packed tower 22.

In the solid CO₂ adsorbent material system according to this embodiment, steam extracted from a steam turbine is used as the heating source for regenerating the solid adsorbent material 21, and therefore, the amount of heat used can be decreased by efficiently recovering heat.

### Third Embodiment

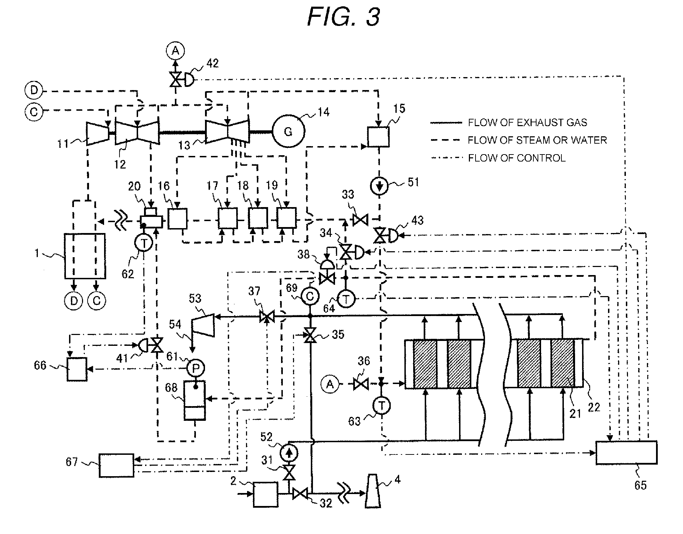

A third embodiment of the solid CO₂ adsorbent material system according to the present invention will be described with reference to Fig. 3. In the third embodiment, a solid CO₂ adsorbent material system when recovery of CO₂ and regeneration of a solid adsorbent material are performed will be described. That is, in this embodiment, by combining the first embodiment and the second embodiment, switching of the operation from a step of allowing the solid adsorbent material to adsorb CO₂ to a step of regenerating the solid adsorbent material, and opposite thereto, that is, switching of the operation from a step of regenerating the solid adsorbent material to a step of allowing the solid adsorbent material to adsorb CO₂ will be described.

Fig. 3 is a schematic structural view of a solid CO₂ adsorbent material system and shows the system when recovery of CO₂ (adsorption of CO₂) and regeneration of a solid adsorbent material are performed. In Fig. 3, the same reference numerals as in Figs. 1 and 2 denote the same or common components as in Figs. 1 and 2, and thus the descriptions of these components will be omitted.

A solid CO₂ adsorbent material system is further provided with control devices 65 to 67, thermometers 62 to 64, a pressure gauge 61, and a CO₂ concentration meter 69. In a pipe for supplying steam A extracted from a steam turbine to a packed tower 22, a valve 36 is provided.

A pipe connecting the packed tower 22 to a chimney 4 has a branching point therein, and branches into two pipes. Through one branched pipe, CO₂ desorbed from a solid adsorbent material 21 is supplied to a compressor 53. In this branched pipe, a valve 37 is provided between the branching point and the compressor 53. Through the other branched pipe, exhaust gas discharged from the packed tower 22 is supplied to the chimney 4. In this branched pipe, a valve 35 is provided between the branching point and the chimney 4.

A pipe connecting the packed tower 22 to a gas-liquid separator 68 has a branching point therein, and branches into two pipes. One branched pipe is joined to a pipe connecting a condenser 15 to a low-pressure feed water heater 19. In this branched pipe, a control valve 34 is provided between the branching point and the low-pressure feed water heater 19. The other branched pipe is connected to the gas-liquid separator 68 and is provided with a control valve 38 between the branching point and the gas-liquid separator 68. The control valve 38 is provided closer to the gas-liquid separator 68 than the branching point where the pipe connecting the packed tower 22 to the gas-liquid separator 68 branches into a pipe connecting the condenser 15 to the low-pressure feed water heater 19.

First, a step of allowing the solid adsorbent material 21 to adsorb CO₂ will be described.

When CO₂ is adsorbed, water condensed by the condenser 15 (cooling water) is supplied to the packed tower 22 by closing a valve 33 and opening a control valve 43. Since the valve 33 is closed, the entire amount of water condensed by the condenser 15 is introduced into the packed tower 22. The amount of water to be introduced into the packed tower 22 may be controlled by opening the valve 33 and adjusting the control valve 43.

In the packed tower 22, CO₂ is adsorbed on the solid adsorbent material 21 along the flowing direction of the exhaust gas, and accompanying this adsorption, the temperature of the solid adsorbent material 21 is increased. In order to cool the solid adsorbent material 21 whose temperature has been increased, it is preferred to allow water and exhaust gas to flow in parallel with each other. The solid adsorbent material 21 is cooled without coming in direct contact with cooling water.

The water after cooling the solid adsorbent material 21 is discharged from the packed tower 22. By opening the control valve 34, the water discharged from the packed tower 22 can be supplied to low-pressure feed water heaters 16 to 19.

The exhaust gas from which CO₂ has been recovered by adsorbing CO₂ by the solid adsorbent material 21 is released from the chimney 4 by closing the valve 37 and opening the valve 35.

Next, switching of the operation from a step of allowing the solid adsorbent material 21 to adsorb CO₂ to a step of regenerating the solid adsorbent material 21 will be described. This switching includes the following two procedures.
1) The supply of water to the packed tower 22 from the condenser 15 is stopped by opening the valve 33 and closing the control valve 43.
2) Steam A extracted from a steam turbine (an intermediate-pressure turbine 12 in Fig. 3) is supplied to the packed tower 22 by opening a control valve 42 and a valve 36.

In the packed tower 22, one inlet is used in common as an inlet of steam in the step of regenerating the solid adsorbent material 21 and an inlet of water in the step of adsorbing CO₂ by the solid adsorbent material 21. Further, one outlet is used in common as an outlet of steam in the step of regenerating the solid adsorbent material 21 and an outlet of water in the step of adsorbing CO₂ by the solid adsorbent material 21. That is, in the packed tower 22, steam in the step of regenerating the solid adsorbent material 21 and water in the step of adsorbing CO₂ by the solid adsorbent material 21 are introduced through the same inlet and discharged through the same outlet. According to this structure, a pipe through which the heat transfer medium (steam or water) flows can be effectively shared between during adsorption and during regeneration, and thus, the structure of this system can be simplified and also the construction cost and repair and maintenance cost for this system can be reduced.

Upstream of a site where the heat transfer medium is introduced in the packed tower 22, a pipe through which water from the condenser 15 flows and a pipe through which the steam A from the steam turbine flows are joined together. At this joining point, a thermometer 63 is provided and the temperature at this joining point is measured. When the operation is switched from the adsorption step to the regeneration step, the heat transfer medium to be supplied to the packed tower 22 is changed from water to steam, and therefore, the temperature at this joining point is rapidly increased. When a difference in temperature between the inner wall and the outer wall of the pipe is large, the pipe is ruptured due to thermal stress, and therefore, it is necessary to gradually increase the temperature of the pipe.

In view of this, by using the control device 65, the flow rate of the steam A to be supplied to the packed tower 22 is controlled so as to gradually increase the flow rate. The control device 65 takes the temperature measured by the thermometer 63 and automatically controls the flow rate of the steam to be supplied to the packed tower 22 by controlling the aperture of the control valve 42 so that the temperature at the above-described joining point is increased at a predetermined rate or less. This predetermined rate can be determined according to the thermal strength of the pipe.

Further, a thermometer 64 is provided at the branching point where the pipe connecting the packed tower 22 to the gas-liquid separator 68 branches into a pipe connecting the condenser 15 to the low-pressure feed water heater 19. The thermometer 64 measures the temperature of the heat transfer medium (steam or water) discharged from the packed tower 22 at this branching point. The temperature at this branching point is gradually increased as the steam supplied to the packed tower 22 is discharged from the packed tower 22. After the temperature at this branching point reaches a predetermined temperature, the following procedure is performed.

3) Steam heat-exchanged by the solid adsorbent material 21 in the packed tower 22 is supplied to the deaerator 20 by opening the control valve 38 and closing the control valve 34.

This procedure 3) can be automatically controlled by using the control device 65. The control device 65 takes the temperature measured by the thermometer 64, and opens the control valve 38 and closes the control valve 34 when the temperature at the above-described branching point reaches a predetermined temperature. In this case, since the fluid flowing through the pipe is changed from water to steam, the temperature measured by the thermometer 64 is rapidly increased. This predetermined temperature is a temperature in a range where the temperature measured by the thermometer 64 is rapidly increased, and is preferably determined according to the operation of the feed water heater or the deaerator.

Since water liquefied by the gas-liquid separator 68 is supplied to the liquid phase in the deaerator 20, a pressure gauge 61 is provided in a gas phase portion in the gas-liquid separator 68. The pressure gauge 61 may be provided in a pipe for supplying steam discharged from the packed tower 22 to the gas-liquid separator 68. The amount of water to be supplied to the deaerator 20 is controlled by changing the aperture of a control valve 41. By this control, in the gas phase portion in the gas-liquid separator 68, a pressure according to the amount of water to be supplied to the deaerator 20 is obtained, and the liquid phase portion in the gas-liquid separator 68 has a water temperature according to this pressure. Accordingly, in this embodiment, the following procedure is performed.

4) The pressure of the gas phase in the gas-liquid separator 68 is adjusted by measuring the pressure of the gas phase in the gas-liquid separator 68 by the pressure gauge 61, and changing the aperture of the control valve 41 so that the liquid phase temperature in the gas-liquid separator 68 and the water temperature in the deaerator 20 are the same.

In the deaerator 20, a thermometer 62 which measures the temperature of water in the deaerator 20 is provided. A control device 66 takes the temperature of water in the deaerator 20 measured by the thermometer 62 and the pressure of the gas phase in the gas-liquid separator 68 measured by the pressure gauge 61. Then, the control device 66 automatically controls the aperture of the control valve 41 so that the water temperature in the deaerator 20 and the liquid phase temperature in the gas-liquid separator 68 are the same.

In the above description, the aperture of the control valve 41 is changed so that the liquid phase temperature in the gas-liquid separator 68 and the water temperature in the deaerator 20 are the same, however, the aperture of the control valve 41 may be changed so that the liquid phase temperature in the gas-liquid separator 68 and the water temperature in the low-pressure feed water heaters 16 to 19 or the high-pressure feed water heater are the same. In this case, the thermometer 62 is provided in the low-pressure feed water heaters 16 to 19 or the high-pressure feed water heater, and the temperature of water in the low-pressure feed water heaters 16 to 19 or the high-pressure feed water heater is measured. The control device 66 takes the temperature of water in the low-pressure feed water heaters 16 to 19 or the high-pressure feed water heater measured by the thermometer 62 and the pressure of the gas phase in the gas-liquid separator 68 measured by the pressure gauge 61.

The solid adsorbent material 21 placed in the packed tower 22 is heated by steam and gradually releases CO₂. Immediately after switching the operation from adsorption to regeneration, the exhaust gas components are contained in a packed bed in the solid adsorbent material 21, and the CO₂ concentration in the exhaust gas released from the packed tower 22 is not high. Therefore, after the CO₂ concentration in the exhaust gas reaches a predetermined value or higher, exhaust gas having a high CO₂ concentration is sent to the compressor 53. In order to measure the CO₂ concentration in the exhaust gas, a CO₂ concentration meter 69 is provided at a branching point where the pipe for discharging the exhaust gas from the packed tower 22 branches into a pipe connected to the compressor 53 and a pipe connected to the chimney 4.

Then, the following procedure is performed.

5) When the CO₂ concentration in the exhaust gas at the branching point where the pipe for discharging the exhaust gas from the packed tower 22 branches into a pipe connected to the compressor 53 and a pipe connected to the chimney 4 reaches a predetermined value or higher, the valve 37 is opened and the valve 35 is closed.

A control device 67 takes the CO₂ concentration measured by the CO₂ concentration meter 69 and automatically performs control such that when the CO₂ concentration reaches a predetermined value or higher, the valve 37 is opened and the valve 35 is closed. This predetermined value of the CO₂ concentration can be determined according to the compressor 53.

Next, switching of the operation from a step of regenerating the solid adsorbent material 21 to a step of allowing the solid adsorbent material 21 to adsorb CO₂ will be described. This switching includes the following two procedures.

6) The supply of the steam A extracted from the steam turbine to the packed tower 22 is stopped by closing the control valve 42.

7) Water is supplied to the packed tower 22 from the condenser 15 by opening the control valve 43.

When the operation is switched from the regeneration step to the adsorption step, the heat transfer medium to be supplied to the packed tower 22 is changed from steam to water, and therefore, the temperature (temperature measured by the thermometer 63) at a point where a pipe through which water from the condenser 15 flows and a pipe through which the steam A from the steam turbine flows are joined together is rapidly decreased. In order to prevent the rupture of the pipe due to this decrease in temperature, it is necessary to gradually decrease the temperature of the pipe.

In view of this, by using the control device 65, the flow rate of water to be supplied to the packed tower 22 is controlled so as to gradually increase the flow rate. The control device 65 takes the temperature measured by the thermometer 63 and automatically controls the flow rate of water to be supplied to the packed tower 22 by controlling the aperture of the control valve 42 so that the temperature at the above-described joining point is decreased at a predetermined rate or less. This predetermined rate can be determined according to the thermal strength of the pipe.

As described above, the thermometer 64 is provided at the branching point where the pipe connecting the packed tower 22 to the gas-liquid separator 68 branches into a pipe connecting the condenser 15 to the low-pressure feed water heater 19. The temperature at this branching point measured by the thermometer 64 is gradually decreased. After the temperature at this branching point reaches a predetermined temperature, the following procedure is performed.

8) Water heat-exchanged by the solid adsorbent material 21 in the packed tower 22 is supplied to the low-pressure feed water heaters 16 to 19 by closing the control valve 38 and opening the control valve 34.

This procedure 8) can be automatically controlled by using the control device 65. The control device 65 takes the temperature measured by the thermometer 64, and closes the control valve 38 and opens the control valve 34 when the temperature at the above-described branching point reaches a predetermined temperature. In this case, since the fluid flowing through the pipe is changed from steam to water, the temperature measured by the thermometer 64 is rapidly decreased. This predetermined temperature in the procedure 8) is a temperature in a range where the temperature measured by the thermometer 64 is rapidly decreased, and is preferably determined according to the operation of the feed water heater or the deaerator.

When the control valve 38 is closed, the pressure of the gas phase portion in the gas-liquid separator 68 is rapidly decreased. The control device 66 takes the temperature of water in the deaerator 20 measured by the thermometer 62 and the pressure of the gas phase in the gas-liquid separator 68 measured by the pressure gauge 61, automatically determines that the pressure of the gas phase in the gas-liquid separator 68 is insufficient with respect to the water temperature in the deaerator 20, and automatically performs control such that the control valve 41 is closed.

Then, the following procedure is performed.

9) The valve 31 is opened and the exhaust gas is supplied to the packed tower 22.

According to this procedure, the CO₂ concentration (measured by the CO₂ concentration meter 69) at the branching point where the pipe for discharging the exhaust gas from the packed tower 22 branches into a pipe connected to the compressor 53 and a pipe connected to the chimney 4 is decreased. The control device 67 takes the CO₂ concentration measured by the CO₂ concentration meter 69 and automatically performs control such that when the CO₂ concentration reaches a predetermined value or lower, the valve 37 is closed and the valve 35 is opened. This predetermined value of the CO₂ concentration can be determined according to the value defined as the concentration of CO₂ discharged by this solid CO₂ adsorbent material system.

Next, the timing when the operation is switched from the adsorption step to the regeneration step and the timing when the operation is switched from the regeneration step to the adsorption step will be described.

In order to regenerate a solid adsorbent material by desorbing CO₂ from the solid adsorbent material, steam is extracted from a steam turbine and the thermal energy of the steam is used. The output of the steam turbine is decreased during the extraction of steam. Therefore, during the time zone when the output of the steam turbine is decreased (that is, the electricity generation amount is decreased) in the conventional operation, an excess amount of the thermal energy may be used as the energy for desorbing CO₂ without decreasing the output of the steam turbine. The time zone when this can be realized is preferably the nighttime when the amount of electrical energy used is decreased. Accordingly, it is preferred to perform the regeneration step during the nighttime.

On the other hand, when CO₂ is recovered during the daytime, the reaction heat generated by adsorption of CO₂ can be utilized for the output of the steam turbine, and thus, it can contribute to the elimination of the shortage of electricity during the daytime. Accordingly, it is preferred to perform the adsorption step during the daytime.

In light of the above description, it is preferred that the operation is switched from the adsorption step to the regeneration step at night and the operation is switched from the regeneration step to the adsorption step early in the morning of the day. By switching the operation in this manner, it is not necessary to decrease the output of the steam turbine during the nighttime, and also the reaction heat generated by adsorption of CO₂ can be utilized during the daytime. Accordingly, an effect of decreasing the amount of heat used can be obtained by efficiently recovering heat, and also a variation in the load (output) of the boiler in the daily cycle can be decreased, and thus, an effect of prolonging the service life of the boiler can be obtained.

### Fourth Embodiment

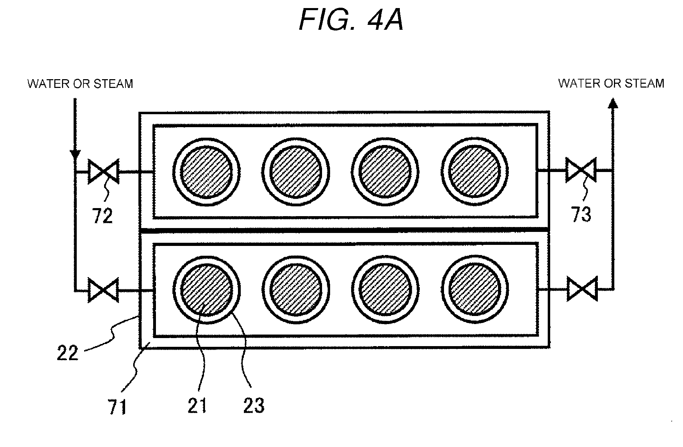

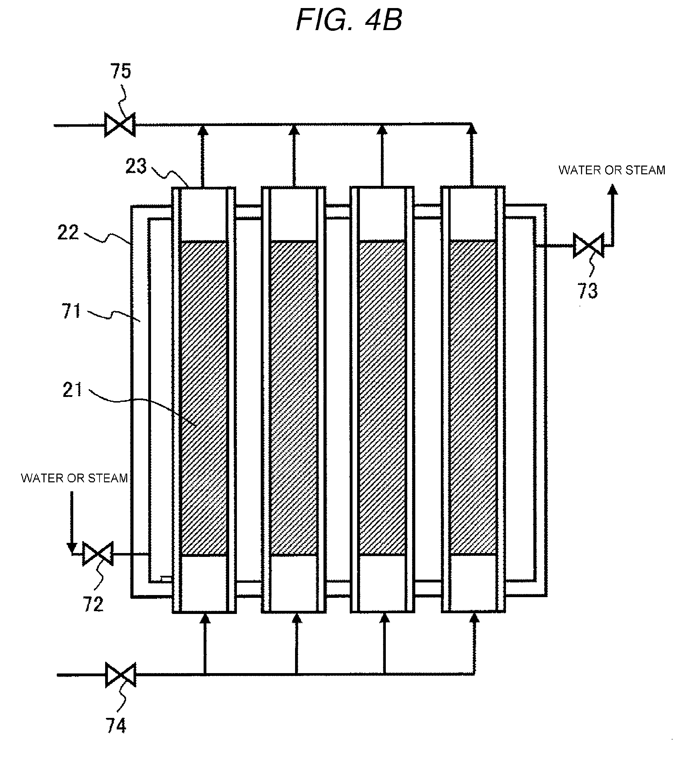

The structure of the packed tower 22 according to an embodiment of the present invention will be described with reference to Figs. 4A and 4B. Fig. 4A is a schematic top view of the packed tower 22, and Fig. 4B is a schematic side view of the packed tower 22.

As shown in Figs. 4A and 4B, the packed tower 22 is provided with cylindrical containers 23, and each of the cylindrical containers 23 is packed with a solid adsorbent material 21. A heat transfer medium (water or steam) that cools or heats the solid adsorbent material 21 flows around the cylindrical containers 23. According to such a structure, the solid adsorbent material 21 can be cooled or heated without coming in contact with the heat transfer medium. Further, the outer circumference of the packed tower 22 is covered with a heat insulating material 71, and heat transfer between the atmosphere and the heat transfer medium can be prevented.

Each of the cylindrical containers 23 packed with the solid adsorbent material 21 is cooled or heated from the outer side toward the inner side by the heat transfer medium, and therefore, a difference in temperature between the outer side and the inner side of the cylindrical container 23 occurs. If this difference in temperature is large, the solid adsorbent material 21 cannot be sufficiently cooled or heated. Therefore, it is preferred that the diameter of the cylindrical container 23 is set such that the difference in temperature between the outer side and the inner side of the cylindrical container 23 is decreased.

Further, if the height of the packed bed in the solid adsorbent material 21 is increased, the pressure loss is increased, and therefore, the exhaust gas cannot be introduced therein. In view of this, it is preferred that the height of the packed bed in the solid adsorbent material 21 is set such that the exhaust gas can be introduced therein.

For such a reason, the diameter of the cylindrical container 23 and the height of the packed bed in the solid adsorbent material 21 each have an upper limit. Therefore, in order to increase the CO₂ recovery performance of the solid CO₂ adsorbent material system, it is preferred to increase the number of the packed towers 22 and also to increase the number of the cylindrical containers 23 packed with the solid adsorbent material 21.

In Figs. 4A and 4B, as one example, a structure in which two packed towers 22 are connected in parallel is shown. Each of the packed towers 22 is provided with four cylindrical containers 23. Incidentally, the number of the packed towers 22 may be one, or may be three or more. Further, the number of the cylindrical containers 23 provided in one packed tower 22 may be three or less, or may be five or more. The number of the packed towers 22 and the number of the cylindrical containers 23 can be determined according to the amount of CO₂ in the exhaust gas or the CO₂ adsorption performance of the solid adsorbent material 21.

Water or steam serving as the heat transfer medium is supplied to each of the packed towers 22. As described above, in the packed tower 22, a site where water serving as the heat transfer medium is introduced and a site where steam serving as the heat transfer medium is introduced are the same. At the site where the heat transfer medium is introduced, a valve 72 is provided. Further, a site where water serving as the heat transfer medium is discharged and a site where steam serving as the heat transfer medium is discharged are the same. At the site where the heat transfer medium is discharged, a valve 73 is provided.

The exhaust gas containing CO₂ is supplied to each of the cylindrical containers 23 in the packed tower 22, and discharged from each of the cylindrical containers 23. At a site where the exhaust gas is introduced into the packed tower 22, a valve 74 is provided, and at a site where the exhaust gas is discharged from the packed tower 22, a valve 75 is provided.

When the valve 72 is opened, the heat transfer medium (water or steam) is supplied to the packed tower 22, and cools or heats the solid adsorbent material 21 in a non-contact manner from the outer side of the cylindrical container 23. When the valve 73 is opened, the heat transfer medium is discharged from the packed tower 22. In the adsorption step, the valve 74 is opened to introduce the exhaust gas containing CO₂ into the cylindrical containers 23, and the valve 75 is opened to discharge the exhaust gas from the cylindrical containers 23. In the regeneration step, the valve 72 is opened and the valve 75 is opened to discharge CO₂ desorbed from the solid adsorbent material 21.

When a plurality of packed towers 22 are provided in the solid CO₂ adsorbent material system, the valves 72 to 75 provided for part of the packed towers 22 are closed, and the part of the packed towers 22 can be kept as spare packed towers 22 which are usually not used. The number of the spare packed towers 22 may be one or more.

By switching the used packed tower 22 to the spare packed tower 22, the solid CO₂ adsorbent material system can be continuously operated, and further, the maintenance of the used packed tower 22 can be performed. Examples of the maintenance include repacking by replacement of deteriorated solid adsorbent material 21 and inspection of damage to pipes or containers.

## Claims

1. A solid CO₂ adsorbent material system, comprising:
a boiler (1) which burns a fossil fuel to generate steam and exhaust gas;
a steam turbine (11 to 13) which is driven by the steam;
a condenser (15) which condenses the steam after driving the steam turbine (11 to 13);
a deaerator (20) and a feed water heater (16 to 19) which heats water condensed by the condenser (15) using steam of the steam turbine (11 to 13); and
a packed tower (22) in which a solid adsorbent material (21) for adsorbing CO₂ is placed and CO₂ in the exhaust gas is adsorbed by the solid adsorbent material (21) when the exhaust gas is supplied thereto;
wherein water condensed by the condenser (15) is supplied to the packed tower (22) as a heat transfer medium, and
the water as a heat transfer medium transfers heat to the solid adsorbent material (21) in a non-contact manner to cool the solid adsorbent material (21) having CO₂ adsorbed thereon, and then is discharged from the packed tower (22) and supplied to the feed water heater (16 to 19) or the deaerator (20).

2. The solid CO₂ adsorbent material system according to claim 1, wherein
a compressor (53) which compresses CO₂ is further provided,
steam of the steam turbine (11 to 13) is supplied to the packed tower (22) as a heat transfer medium,
the steam as a heat transfer medium transfers heat to the solid adsorbent material (21) in a non-contact manner to heat the solid adsorbent material (21) having CO₂ adsorbed thereon, thereby desorbing CO₂ from the solid adsorbent material (21), and then is discharged from the packed tower (22) and supplied to the feed water heater (16 to 19) or the deaerator (20), and
the compressor (53) compresses CO₂ desorbed from the solid adsorbent material (21) and recovers CO₂.

3. The solid CO₂ adsorbent material system according to claim 2, wherein
in the packed tower (22), an inlet of the water as a heat transfer medium and an inlet of the steam as a heat transfer medium are the same, and an outlet of the water as a heat transfer medium and an outlet of the steam as a heat transfer medium are the same.

4. The solid CO₂ adsorbent material system according to claim 2, wherein
to the packed tower (22), the water as a heat transfer medium is supplied through a pipe connecting the condenser (15) to the packed tower (22), and the steam as a heat transfer medium is supplied through a pipe connecting the steam turbine (11 to 13) to the packed tower (22),
these two pipes are joined together upstream of the packed tower (22), and
the pipe connecting the steam turbine (11 to 13) to the packed tower (22) is provided with a valve (33) which controls the flow rate of the steam.

5. The solid CO₂ adsorbent material system according to claim 2, wherein
water condensed by the condenser (15) is supplied to the feed water heater (16 to 19),
to the condenser (15), a pipe which has a branching point for branching the pipe into two pipes such that the water is supplied to the packed tower (22) through one branched pipe and the water is supplied to the feed water heater (16 to 19) through the other branched pipe is connected, and
the pipe is provided with valves which control the flow rate of the water, one (43) is provided between the branching point and the packed tower (22) and the other (33) is provided between the branching point and the feed water heater (16 to 19).

6. The solid CO₂ adsorbent material system according to claim 2, wherein
a gas-liquid separator (68) which condenses the steam discharged from the packed tower (22) is further provided between the packed tower (22) and the feed water heater (16 to 19) or between the packed tower (22) and the deaerator (20),
the steam as a heat transfer medium is supplied to the packed tower (22) through a pipe connecting the steam turbine (11 to 13) to the packed tower (22),
the pipe connecting the steam turbine (11 to 13) to the packed tower (22) is provided with a valve (42) which controls the flow rate of the steam, and
a pipe connecting the gas-liquid separator (68) to the feed water heater (16 to 19) or a pipe connecting the gas-liquid separator (68) to the deaerator (20) is provided with a valve (41) which controls the pressure of a gas phase in the gas-liquid separator (68).

7. The solid CO₂ adsorbent material system according to claim 6, wherein
a pipe connecting the packed tower (22) to the gas-liquid separator (68) has a branching point for branching the pipe into two pipes, one branched pipe is connected to the gas-liquid separator (68) and a valve (38) which controls the flow rate of the steam is provided between the branching point and the gas-liquid separator (68), and the other branched pipe is connected to the feed water heater (16 to 19) and a valve (34) which controls the flow rate of the water is provided between the branching point and the feed water heater (16 to 19).

8. The solid CO₂ adsorbent material system according to claim 2, wherein
to the packed tower (22), a pipe which has a branching point for branching the pipe into two pipes such that the exhaust gas discharged from the packed tower (22) is supplied to a chimney (4) through one branched pipe and CO₂ desorbed from the solid adsorbent material is supplied to the compressor (53) through the other branched pipe is connected, and
the pipe is provided with valves (35, 37) which control the release of the exhaust gas from the chimney (4), one (35) is provided between the branching point and the chimney (4) and the other (37) is provided between the branching point and the compressor (53).

9. The solid CO₂ adsorbent material system according to claim 4, wherein
a thermometer (63) is provided at the joining point where the pipe connecting the condenser (15) to the packed tower (22) and the pipe connecting the steam turbine (11 to 13) to the packed tower (22) are joined together, and
a control device (65) which takes the temperature measured by the thermometer (63) and controls the flow rate of the steam to be supplied to the packed tower (22) by controlling the aperture of the valve (42) provided in the pipe connecting the steam turbine (11 to 13) to the packed tower (22) so that the temperature at the joining point is increased at a predetermined rate or less is further provided.

10. The solid CO₂ adsorbent material system according to claim 5, wherein
to the packed tower (22), the water as a heat transfer medium is supplied through a pipe connecting the condenser (15) to the packed tower (22), and the steam as a heat transfer medium is supplied through a pipe connecting the steam turbine (11 to 13) to the packed tower (22),
these two pipes are joined together upstream of the packed tower (22),
a thermometer (63) is provided at the joining point where these two pipes are joined together, and
a control device (65) which takes the temperature measured by the thermometer (63) and controls the flow rate of the water to be supplied to the packed tower (22) by controlling the aperture of the valve (43) provided between the branching point and the packed tower (22) in the pipe for supplying the water to the packed tower (22) from the condenser (15) so that the temperature at the joining point is decreased at a predetermined rate or less is further provided.

11. The solid CO₂ adsorbent material system according to claim 7, wherein
a thermometer (64) is provided at the branching point,
and
a control device (65) which takes the temperature measured by the thermometer and switches the opening and closing of the valve (38) between the branching point and the gas-liquid separator (68) and also switches the opening and closing of the valve (34) between the branching point and the feed water heater (16 to 19) according to the temperature at the branching point is further provided.

12. The solid CO₂ adsorbent material system according to claim 6, wherein
a pressure gauge (61) is provided in a gas phase in the gas-liquid separator (68) or in a pipe through which the steam discharged from the packed tower (22) is supplied to the gas-liquid separator (68),
a thermometer (62) is provided in the feed water heater (16 to 19) or the deaerator (20), and
a control device (66) which takes the pressure measured by the pressure gauge (61) and the water temperature in the feed water heater (16 to 19) or the deaerator (20) measured by the thermometer (62), and controls the pressure of the gas phase in the gas-liquid separator (68) by changing the aperture of the valve (41) provided in the pipe connecting the gas-liquid separator (68) to the feed water heater (16 to 19) or the pipe connecting the gas-liquid separator (68) to the deaerator (20) according to the water temperature in the feed water heater (16 to 19) or the deaerator (20).

## Patentansprüche

1. CO₂-Adsorbens-Feststoffsystem, umfassend:
einen Boiler (1), der einen fossilen Brennstoff zum Erzeugen von Dampf und Abgas verbrennt;
eine Dampfturbine (11 bis 13), die durch den Dampf angetrieben wird;
einen Kondensator (15), der den Dampf nach dem Antreiben der Dampfturbine (11 bis 13) kondensiert;
einen Entgaser (20) und eine Zuführwasserheizung (16 bis 19), die vom Kondensator (15) kondensiertes Wasser mittels Dampf der Dampfturbine (11 bis 13) erhitzt; und
einen Packturm (22), in dem ein festes Adsorbensmaterial (21) zum Adsorbieren von CO₂ platziert ist und CO₂ im Abgas vom festen Adsorbensmaterial (21) adsorbiert wird, wenn das Abgas zugeführt wird;
wobei vom Kondensator (15) kondensiertes Wasser dem Packturm (22) als ein Wärmeübertragungsmedium zugeführt wird; und
das Wasser als ein Wärmeübertragungsmedium Wärme zum festen Adsorbensmaterial (21) ohne Berührung überträgt, um das feste Adsorbensmaterial (21) mit dem darauf adsorbierten CO₂ zu kühlen, und dann vom Packturm (22) ausgelassen und der Zuführwasserheizung (16 bis 19) oder dem Entgaser (20) zugeführt wird.

2. CO₂-Adsorbens-Feststoffsystem nach Anspruch 1, wobei
ein Kompressor (53), der CO₂ komprimiert, ferner vorgesehen ist,
Dampf aus der Dampfturbine (11 bis 13) dem Packturm (22) als ein Wärmeübertragungsmedium zugeführt wird,
der Dampf als ein Wärmeübertragungsmedium Wärme auf das feste Adsorbensmaterial (21) ohne Berührung überträgt, um das feste Adsorbensmaterial (21) mit dem darauf adsorbierten CO₂ zu erhitzen, wodurch CO₂ vom festen Adsorbensmaterial (21) desorbiert wird, und dann vom Packturm (22) ausgelassen und der Zuführwasserheizung (16 bis 19) oder dem Entgaser (20) zugeführt wird, und
der Kompressor (53) vom festen Adsorbensmaterial (21) desorbiertes CO₂ komprimiert und CO₂ zurückgewinnt.

3. CO₂-Adsorbens-Feststoffsystem nach Anspruch 2, wobei
im Packturm (22) ein Einlass des Wassers als Wärmeübertragungsmedium und ein Einlass des Dampfes als Wärmeübertragungsmedium die gleichen sind und ein Auslass des Wassers als Wärmeübertragungsmedium und ein Auslass des Dampfes als Wärmeübertragungsmedium die gleichen sind.

4. CO₂-Adsorbens-Feststoffsystem nach Anspruch 2, wobei
dem Packturm (22) das Wasser als ein Wärmeübertragungsmedium durch eine den Kondensator (15) mit dem Packturm (22) verbindende Röhre zugeführt wird und der Dampf als ein Wärmeübertragungsmedium durch eine die Dampfturbine (11 bis 13) mit dem Packturm (22) verbindende Röhre zugeführt wird,
diese beiden Röhren strömungsaufwärts vom Packturm (22) miteinander verbunden sind und
die die Dampfturbine (11 bis 13) mit dem Packturm (22) verbindende Röhre mit einem Ventil (33) versehen ist, das die Strömungsrate des Dampfes steuert.

5. CO₂-Adsorbens-Feststoffsystem nach Anspruch 2, wobei
vom Kondensator (15) kondensiertes Wasser der Zuführwasserheizung (16 bis 19) zugeführt wird,
mit dem Kondensator (15) eine Röhre verbunden ist, die einen Verzweigungspunkt zum Verzweigen der Röhre in zwei Röhren aufweist, sodass das Wasser dem Packturm (22) durch eine verzweigte Röhre zugeführt wird und das Wasser der Zuführwasserheizung (16 bis 19) durch die andere verzweigte Röhre zugeführt wird, und
die Röhre mit Ventilen versehen ist, die die Strömungsrate des Wassers steuern, wobei eines (43) zwischen dem Verzweigungspunkt und dem Packturm (22) vorgesehen ist und das andere (33) zwischen dem Verzweigungspunkt und der Zuführwasserheizung (16 bis 19) vorgesehen ist.

6. CO₂-Adsorbens-Feststoffsystem nach Anspruch 2, wobei
eine Gas-Flüssigkeit-Trenneinrichtung (68), die den vom Packturm (22) ausgelassenen Dampf kondensiert, ferner zwischen dem Packturm (22) und der Zuführwasserheizung (16 bis 19) oder zwischen dem Packturm (22) und dem Entgaser (20) vorgesehen ist,
der Dampf als ein Wärmeübertragungsmedium dem Packturm (22) durch eine die Dampfturbine (11 bis 13) mit dem Packturm (22) verbindende Röhre zugeführt wird,
die die Dampfturbine (11 bis 13) mit dem Packturm (22) verbindende Röhre mit einem Ventil (42) versehen ist, das die Strömungsrate des Dampfes steuert, und
eine die Gas-Flüssigkeit-Trenneinrichtung (68) mit der Zuführwasserheizung (16 bis 19) verbindende Röhre oder eine die Gas-Flüssigkeit-Trenneinrichtung (68) mit dem Entgaser (20) verbindende Röhre mit einem Ventil (41) versehen ist, das den Druck einer Gasphase in der Gas-Flüssigkeit-Trenneinrichtung (68) steuert.

7. CO₂-Adsorbens-Feststoffsystem nach Anspruch 6, wobei
eine den Packturm (22) mit der Gas-Flüssigkeit-Trenneinrichtung (68) verbindende Röhre einen Verzweigungspunkt zum Verzweigen der Röhre in zwei Röhren aufweist, wobei eine verzweigte Röhre mit der Gas-Flüssigkeit-Trenneinrichtung (68) verbunden ist und ein Ventil (38), das die Strömungsrate des Dampfes steuert, zwischen dem Verzweigungspunkt und der Gas-Flüssigkeit-Trenneinrichtung (68) vorgesehen ist, und die andere verzweigte Röhre mit der Zuführwasserheizung (16 bis 19) verbunden ist und ein Ventil (34), das die Strömungsrate des Wassers steuert, zwischen dem Verzweigungspunkt und der Zuführwasserheizung (16 bis 19) vorgesehen ist.

8. CO₂-Adsorbens-Feststoffsystem nach Anspruch 2, wobei
mit dem Packturm (22) eine Röhre verbunden ist, die einen Verzweigungspunkt zum Verzweigen der Röhre in zwei Röhren aufweist, sodass das vom Packturm (22) ausgelassene Abgas durch eine verzweigte Röhre einem Abzug (4) zugeführt wird und vom festen Adsorbensmaterial desorbiertes CO₂ durch die andere verzweigte Röhre dem Kompressor (53) zugeführt wird, und
die Röhre mit Ventilen (35, 37) versehen ist, die die Abgabe des Abgases aus dem Abzug (4) steuern, wobei eines (35) zwischen dem Verzweigungspunkt und dem Abzug (4) vorgesehen ist und das andere (37) zwischen dem Verzweigungspunkt und dem Kompressor (53) vorgesehen ist.

9. CO₂-Adsorbens-Feststoffsystem nach Anspruch 4, wobei
ein Thermometer (63) an dem Verbindungspunkt, an dem die den Kondensator (15) mit dem Packturm (22) verbindende Röhre und die die Dampfturbine (11 bis 13) mit dem Packturm (22) verbindende Röhre miteinander verbunden sind, vorgesehen ist und
ein Steuergerät (65), das die vom Thermometer (63) gemessene Temperatur nimmt und die Strömungsrate des dem Packturm (22) zuzuführenden Dampfes steuert, indem die Öffnung des Ventils (42), das in der die Dampfturbine (11 bis 13) mit dem Packturm (22) verbindenden Röhre vorgesehen ist, gesteuert wird, sodass die Temperatur am Verbindungspunkt mit einer vorgegebenen Rate oder weniger erhöht wird, ferner vorgesehen ist.

10. CO₂-Adsorbens-Feststoffsystem nach Anspruch 5, wobei
dem Packturm (22) das Wasser als ein Wärmeübertragungsmedium durch eine dem Kondensator (15) mit dem Packturm (22) verbindende Röhre zugeführt wird und der Dampf als ein Wärmeübertragungsmedium durch eine die Dampfturbine (11 bis 13) mit dem Packturm (22) verbindende Röhre zugeführt wird,
diese beiden Röhren strömungsaufwärts vom Packturm (22) miteinander verbunden sind,
ein Thermometer (63) an dem Verbindungspunkt, an dem diese beiden Röhren miteinander verbunden sind, vorgesehen ist und
ein Steuergerät (65), das die vom Thermometer (63) gemessene Temperatur nimmt und die Strömungsrate des dem Packturm (22) zuzuführenden Wassers steuert, indem die Öffnung des Ventils (43), das zwischen dem Verzweigungspunkt und dem Packturm (22) in der Röhre zum Zuführen des Wassers an den Packturm (22) vom Kondensator (15) vorgesehen ist, gesteuert wird, sodass die Temperatur am Verbindungspunkt mit einer vorgegebenen Rate oder weniger verringert wird, ferner vorgesehen ist.

11. CO₂-Adsorbens-Feststoffsystem nach Anspruch 7, wobei
ein Thermometer (64) am Verzweigungspunkt vorgesehen ist und
ein Steuergerät (65), das die vom Thermometer gemessene Temperatur nimmt und das Umschalten des Öffnens und Schließens des Ventils (68) zwischen dem Verzweigungspunkt und der Gas-Flüssigkeit-Trenneinrichtung (68) umschaltet und ebenfalls das Öffnung und Schließen des Ventils (34) zwischen dem Verzweigungspunkt und der Zuführwasserheizung (16 bis 19) umschaltet, gemäß der Temperatur am Verzweigungspunkt, ferner vorgesehen ist.

12. CO₂-Adsorbens-Feststoffsystem nach Anspruch 6, wobei
eine Drucklehre (61) in einer Gasphase in der Gas-Flüssigkeit-Trenneinrichtung (68) oder in einer Röhre, durch die der vom Packturm (22) ausgelassene Dampf der Gas-Flüssigkeit-Trenneinrichtung (68) zugeführt wird, vorgesehen ist,
ein Thermometer (62) in der Zuführwasserheizung (16 bis 19) oder dem Entgaser (20) vorgesehen ist und
ein Steuergerät (66), das den von der Drucklehre (61) gemessenen Druck und die vom Thermometer (62) gemessene Wassertemperatur in der Zuführwasserheizung (16 bis 19) oder dem Entgaser (20) nimmt und den Druck der Gasphase in der Gas-Flüssigkeit-Trenneinrichtung (68) steuert, indem die Öffnung des Ventils (41), das in der die Gas-Flüssigkeit-Trenneinrichtung (68) mit der Zuführwasserheizung (16 bis 19) verbindenden Röhre oder der die Gas-Flüssigkeit-Trenneinrichtung (68) mit dem Entgaser (20) verbindenden Röhre vorgesehen ist, entsprechend der Wassertemperatur in der Zuführwasserheizung (16 bis 19) oder dem Entgaser (20) geändert wird.

## Revendications

1. Système de matériau adsorbant CO₂ solide comportant :
une chaudière (1) qui brûle un combustible fossile pour produire de la vapeur et du gaz d'échappement,
une turbine à vapeur (11 à 13) qui est entraînée par la vapeur,
un condenseur (15) qui condense la vapeur après avoir entraîné la turbine à vapeur (11 à 13),
un séparateur d'air (20) et un dispositif de chauffage d'eau d'alimentation (16 à 19) qui chauffe l'eau condensée par le condenseur (15) en utilisant la vapeur de la turbine à vapeur (11 à 13), et
une colonne à garnissage (22) dans laquelle un matériau adsorbant solide (21) pour adsorber le CO₂ est placé et le CO₂ dans le gaz d'échappement est adsorbé par le matériau adsorbant solide (21) lorsque le gaz d'échappement est fourni à celui-ci,
dans lequel l'eau condensée par le condenseur (15) est envoyée dans la colonne à garnissage en tant que milieu de transfert de chaleur, et
l'eau en tant que milieu de transfert de chaleur transfère la chaleur dans le matériau adsorbant solide (21) d'une manière sans contact pour refroidir le matériau adsorbant solide (21) ayant adsorbé du CO₂ sur celui-ci, et est ensuite évacuée de la colonne à garnissage (22) et fournie au dispositif de chauffage d'eau d'alimentation (16 à 19) ou au séparateur d'air (20).

2. Système de matériau adsorbant CO₂ solide selon la revendication 1, dans lequel
un compresseur (53) qui comprime le CO₂ est en outre prévu,
la vapeur de la turbine à vapeur (11 à 13) est fournie à la colonne à garnissage (22) en tant que milieu de transfert de chaleur,
la vapeur en tant que milieu de transfert de chaleur transfère la chaleur vers le matériau adsorbant solide (21) d'une manière sans contact pour chauffer le matériau adsorbant solide (21) ayant adsorbé du CO₂ sur celui-ci, de manière à désorber le CO₂ du matériau adsorbant solide (21), et est ensuite évacuée de la colonne à garnissage (22) et fournie au dispositif de chauffage d'eau d'alimentation (16 à 19) ou au séparateur d'air (20), et
le compresseur (53) comprime le CO₂ désorbé du matériau adsorbant solide (21) et récupère le CO₂.

3. Système de matériau adsorbant CO₂ solide selon la revendication 2, dans lequel
dans la colonne à garnissage (22), un orifice d'entrée de l'eau en tant que milieu de transfert de chaleur et un orifice d'entrée de la vapeur d'eau en tant que milieu de transfert de chaleur sont les mêmes, et un orifice de sortie de l'eau en tant que milieu de transfert de chaleur et un orifice de sortie de la vapeur d'eau en tant que milieu de transfert de chaleur sont les mêmes.

4. Système de matériau adsorbant CO₂ solide selon la revendication 2, dans lequel
dans la colonne à garnissage (22), l'eau en tant que milieu de transfert de chaleur est alimentée à travers un tuyau reliant le condenseur (15) à la colonne à garnissage (22), et la vapeur d'eau en tant que milieu de transfert de chaleur est alimenté à travers un tuyau reliant la turbine à vapeur (11 à 13) à la colonne à garnissage (22),
ces deux tuyaux sont reliés entre eux en amont de la colonne à garnissage (22), et
le tuyau reliant la turbine à vapeur (11 à 13) à la colonne à garnissage (22) est muni d'une vanne (33) qui commande le débit de la vapeur.

5. Système de matériau adsorbant CO₂ solide selon la revendication 2, dans lequel
l'eau condensée par le condenseur (15) est fournie au dispositif de chauffage d'eau d'alimentation (16 à 19),
dans le condenseur (15), un tuyau qui a un point de ramification pour séparer le tuyau en deux tuyaux de telle sorte que l'eau est fournie à la colonne à garniture (22) à travers un tuyau ramifié et l'eau est fournie au dispositif de chauffage d'eau d'alimentation (16 à 19) à travers l'autre tuyau ramifié est relié, et
le tuyau est prévu avec des vannes qui contrôlent le débit de l'eau d'écoulement, une est prévu entre le point de ramification et la colonne garnie et l'autre est prévue entre le point de ramification et le dispositif de chauffage d'eau d'alimentation (16 à 19).

6. Système de matériau adsorbant CO₂ solide selon la revendication 2, dans lequel
un séparateur gaz-liquide (68) qui condense la vapeur déchargée de la colonne à garnissage (22) est en outre prévu entre la colonne à garnissage (22) et le dispositif de chauffage d'eau d'alimentation (16 à 19) ou entre la colonne à garnissage (22) et le séparateur d'air (20),
la vapeur d'eau en tant que milieu de transfert de chaleur est fournie à la colonne à garnissage (22) à travers un tuyau reliant la turbine à vapeur (11 à 13) à la colonne à garnissage (22),
le tuyau reliant la turbine à vapeur (11 à 13) à la colonne à garnissage (22) est muni d'une vanne (42) qui commande le débit de la vapeur, et
un tuyau reliant le séparateur gaz-liquide (68) au dispositif de chauffage d'eau d'alimentation (16 à 19) ou un tuyau reliant le séparateur gaz-liquide (68) au séparateur d'air (20) est muni d'une vanne (41) qui commande la pression d'une phase gazeuse dans le séparateur gaz-liquide (68).

7. Système de matériau adsorbant CO₂ solide selon la revendication 6, dans lequel
un tuyau reliant la colonne à garniture (22) au séparateur gaz-liquide (68) a un point de ramification pour séparer le tuyau en deux tuyaux, un tuyau ramifié est connecté au séparateur gaz-liquide (68) et une vanne qui commande le débit de la vapeur est prévue entre le point de ramification et le séparateur gaz-liquide (68), et l'autre tuyau ramifié est relié au dispositif de chauffage d'eau d'alimentation (16 à 19) et une vanne (34) qui commande le débit de l'eau est prévue entre le point de ramification et le dispositif de chauffage d'eau d'alimentation (16 à 19).

8. Système de matériau adsorbant CO₂ solide selon la revendication 2, dans lequel
dans la colonne à garniture (22), un tuyau qui a un point de ramification pour séparer le tuyau en deux tuyaux de telle sorte que le gaz d'échappement évacué de la colonne à garnissage (22) est fourni à une cheminée (4) à travers un tuyau de dérivation et le CO₂ désorbé du matériau adsorbant solide est fourni au compresseur (53) à travers l'autre tuyau ramifié est relié, et
le tuyau est prévu avec des vannes (35, 37) qui commandent la libération du gaz d'échappement de la cheminée (4), une (35) est prévue entre le point de ramification et la cheminée (4) et l'autre (37) est prévue entre le point de ramification et le compresseur (53).

9. Système de matériau adsorbant CO₂ solide selon la revendication 4, dans lequel
un thermomètre est fourni au point de jonction où le tuyau reliant le condenseur (15) à la colonne à garnissage et le tuyau reliant la turbine à vapeur (11 à 13) à la colonne à garnissage (22) sont réunis, et
un dispositif de commande (65), qui prend la température mesurée par le thermomètre (63) et commande le débit de la vapeur devant être fournie à la colonne à garnissage (22) en commandant l'ouverture de la vanne (22) prévue dans le tuyau reliant la turbine à vapeur (11 à 13) à la colonne à garnissage (22) de telle sorte que la température au point de jonction est augmentée à une vitesse prédéterminée ou inférieure, est en outre prévu.

10. Système de matériau adsorbant CO₂ solide selon la revendication selon la revendication 5, dans lequel
dans la colonne à garnissage (22), l'eau en tant que milieu de transfert de chaleur est alimenté à travers un tuyau reliant le condenseur (15) à la colonne à garnissage (22), et la vapeur d'eau en tant que milieu de transfert de chaleur est alimentée à travers un tuyau reliant la turbine à vapeur (11 à 13) à la colonne à garnissage (22),
ces deux tuyaux sont reliés entre eux en amont de la colonne à garnissage (22),
un thermomètre (63) est prévu au niveau du point de jonction où les deux tuyaux sont reliés entre eux, et
un dispositif de commande (65), qui prend la température mesurée par le thermomètre (63) et commande le débit de l'eau devant être fournie à la colonne à garnissage (22) en commandant l'ouverture de la vanne (43) disposée entre le point de ramification et la colonne à garnissage (22) dans le tuyau pour amener l'eau dans la colonne à garnissage (22) depuis le condenseur (15) de sorte que la température au point de jonction est abaissée à une vitesse prédéterminée ou inférieure, est en outre prévu.

11. Système de matériau adsorbant CO₂ solide selon la revendication 7, dans lequel
un thermomètre (64) est fourni au point de ramification, et
un dispositif de commande (65), qui prend la température mesurée par le thermomètre et commute l'ouverture et la fermeture de la vanne (38) entre le point de ramification et le séparateur gaz-liquide (68) et commute également l'ouverture et la fermeture de la vanne (34) entre le point de ramification et le dispositif de chauffage d'eau d'alimentation (16 à 19) selon la température au point de ramification, est en outre prévu.

12. Système de matériau adsorbant CO₂ solide selon la revendication 6, dans lequel
une jauge de pression (61) est prévue dans une phase gazeuse dans le séparateur gaz-liquide (68) ou dans un conduit à travers lequel la vapeur déchargée de la colonne à garnissage (22) est fournie au séparateur gaz-liquide (68),
un thermomètre (62) est prévu dans le dispositif de chauffage d'eau d'alimentation (16 à 19) ou le séparateur d'air (20), et
un dispositif de commande (66) qui prend la pression mesurée par la jauge de pression (61) et la température de l'eau dans le dispositif de chauffage d'eau d'alimentation (16 à 19) ou le séparateur d'air (20) mesurée par le thermomètre (62), et commande la pression de la phase gazeuse dans le séparateur gaz-liquide (68) en modifiant l'ouverture de la vanne (41) prévue dans le tuyau reliant le séparateur gaz-liquide (68) au dispositif de chauffage d'eau d'alimentation (16 à 19) ou le tuyau reliant le séparateur gaz-liquide (68) au séparateur d'air (20) en fonction de la température de l'eau dans le dispositif de chauffage d'eau d'alimentation (16 à 19) ou le séparateur d'air (20).
